# FASCICULE DE BREVET EUROPEEN

(11) **EP 2 622 954 B1**
(45) Date de publication et mention de la délivrance du brevet: **20.04.2016**
(21) Numéro de dépôt: 13154038.7
(22) Date de dépôt: 05.02.2013
(51) Int. Cl.: A01B 73/00, A01C 7/04, A01B 63/00, A01C 7/20

(54) **Semoir monograine avec roues jumelées**
Einzelkornsämaschine mit Zwillingsbereifung
Precision seed drills with double wheels

(30) Priorité: 06.02.2012 FR 1251067
(43) Date de publication de la demande: 07.08.2013
(73) Titulaire: KUHN S.A., 67700 Saverne (FR)
(72) Inventeur: Audigie, Jean-Charles, 67330 Bouxwiller (FR); Laplanche, Cédric, 67700 Saverne (FR)
(74) Mandataire: Esch, Esther Evelyne

(56) Documents cités:
- EP-A1- 2 030 495
- WO-A1-2005/065440
- US-A- 4 653 410
- US-A1- 2004 025 766

## Description

La présente invention se rapporte au domaine technique général du machinisme agricole. L'invention concerne un semoir monograine comportant un châssis télescopique de largeur variable, au moins deux roues porteuses, des éléments semeurs répartis de manière régulière et réglable sur ledit châssis et des enfouisseurs associés aux éléments semeurs, chaque élément semeur définissant un rang de semis lequel est sensiblement confondu avec le plan vertical médian de l'élément semeur correspondant et la distance entre deux rangs de semis voisins définissant l'écartement. Un tel semoir est connu par EP-A-2030495.

Sur des semoirs monograines connus de ce genre, le châssis présente une largeur variable et repose au sol via deux roues porteuses. Des éléments semeurs sont répartis sur le châssis. Grâce à un tel châssis de largeur variable, l'écartement entre les rangs de semis peut varier pour être adapté aux différents types de graines à semer. Un réglage de l'écartement entre les rangs de semis ou entre les éléments semeurs entraîne une modification de la largeur du châssis. De façon générale, de tels semoirs monograines permettent une adaptation de l'écartement de 50 à 80 cm entre les rangs de semis. Il est aussi d'usage de réaliser l'apport d'engrais et le semis en un seul passage. Ainsi, des enfouisseurs d'engrais et un réservoir de fertilisant sont montés sur le châssis en sus des éléments semeurs. A l'avant de chaque élément semeur est donc monté un enfouisseur pour déposer l'engrais à quelques centimètres du rang de semis. En vue de supporter la charge du semoir, les roues porteuses sont des roues larges. Les roues sont décalées latéralement par rapport à l'élément semeur pour ne pas tasser le rang de semis. Avec un tel semoir, il n'est pas possible de semer en rangs serrés c'est-à-dire avec un écartement inférieur à 50 cm. En effet, une réduction supplémentaire de l'écartement entre les éléments semeurs entraînerait des détériorations pour la roue porteuse et pour l'enfouisseur du rang voisin. Par ailleurs, la roue porteuse qui est large tassera au moins partiellement le rang de semis voisin lors d'un écartement permettant de semer en rangs serrés.

La présente invention a pour but de remédier aux inconvénients précités. Elle doit proposer un semoir monograine avec une plage de réglage d'écartement entre les rangs de semis plus importante.

A cet effet, une importante caractéristique de l'invention consiste en ce que chaque roue porteuse comporte des roues jumelles et que lesdites roues jumelles sont espacées l'une par rapport à l'autre et disposées de part et d'autre d'un rang de semis. Grâce à ces caractéristiques, le semoir de l'invention est capable d'effectuer des semis en rangs serrés sans tasser les rangs de semis ni dégrader l'une des pièces du semoir. La plage de réglage des écartements a été étendue puisqu'avec le semoir de l'invention des écartements plus serrés sont réalisables. Les roues jumelles restent ainsi toujours entre les rangs de semis quel que soit le réglage de l'écartement.

D'autres caractéristiques et avantages de l'invention se dégageront de la description qui va suivre en regard des dessins annexés qui ne sont donnés qu'à titre d'exemples non limitatifs de l'invention. Sur ces dessins :
- la **figure 1** représente une vue de dessus d'un semoir selon la présente invention dans une configuration rangs serrés,
- la **figure 2** est une vue de détail de la figure 1 avec une roue porteuse selon l'invention,
- la **figure 3** représente une vue de dessus de semoir dans une autre configuration.

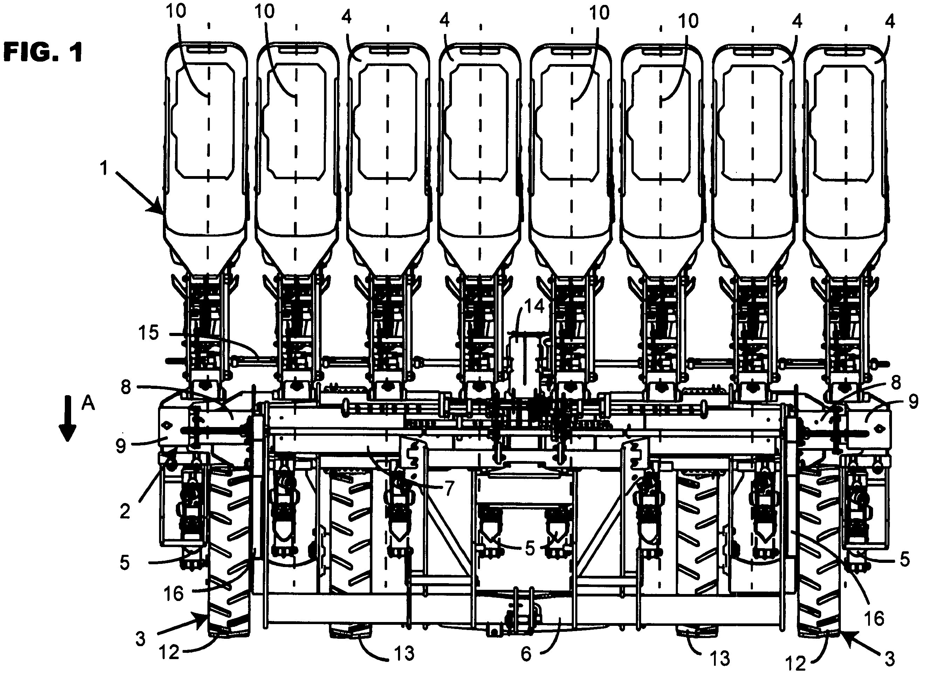

La machine agricole selon l'invention est un semoir monograine (1). Un tel semoir (1) distribue les graines une à une sur la ligne de semis à des écartements constants. La figure 1 montre en vue de dessus un semoir dans une configuration de travail. Le semoir monograine (1) comporte un châssis (2) de largeur variable, deux roues porteuses (3), des éléments semeurs (4) répartis de manière régulière et réglable sur ledit châssis (2) et des enfouisseurs (5) associés aux éléments semeurs (4). Le châssis (2) comporte aussi un cadre d'attelage (6) permettant d'établir une liaison à un attelage trois points d'un tracteur (non représenté). Cet attelage trois points permet de transférer le poids et l'effort du semoir (1) sur les roues arrière du tracteur. Le tracteur déplace le semoir (1) suivant une direction d'avance indiquée par la flèche (A). Dans la suite de la description, les notions suivantes "avant", "arrière" et "devant", "derrière" sont définies par rapport au sens d'avance (A).

Le châssis (2) est constitué d'une poutre transversale sensiblement horizontale et dirigée perpendiculairement à la direction d'avance (A) lors du travail, sur laquelle sont répartis les éléments semeurs (4) suivant un écartement défini et réglable. Les éléments semeurs (4) sont avantageusement répartis symétriquement sur la poutre transversale par rapport au plan vertical médian du semoir (1). La poutre transversale présente une partie centrale (7) et de part et d'autre au moins une extension coulissante (8, 9). Il s'agit donc d'un châssis télescopique qui passe d'un encombrement minimum à un encombrement maximum et inversement par coulissement des extensions coulissantes (8, 9) dans la partie centrale (7). Une telle conception du châssis (2) permet de modifier rapidement l'écartement entre les éléments semeurs (4). Dans l'exemple représenté, chaque élément semeur (4) possède une trémie, une distribution et un dispositif d'implantation. Seule la trémie est visible sur les figures. Le montage de l'élément semeur (4) sur le châssis (2) se fait au moyen d'un parallélogramme déformable qui lui permet de se déplacer parallèlement au sol.

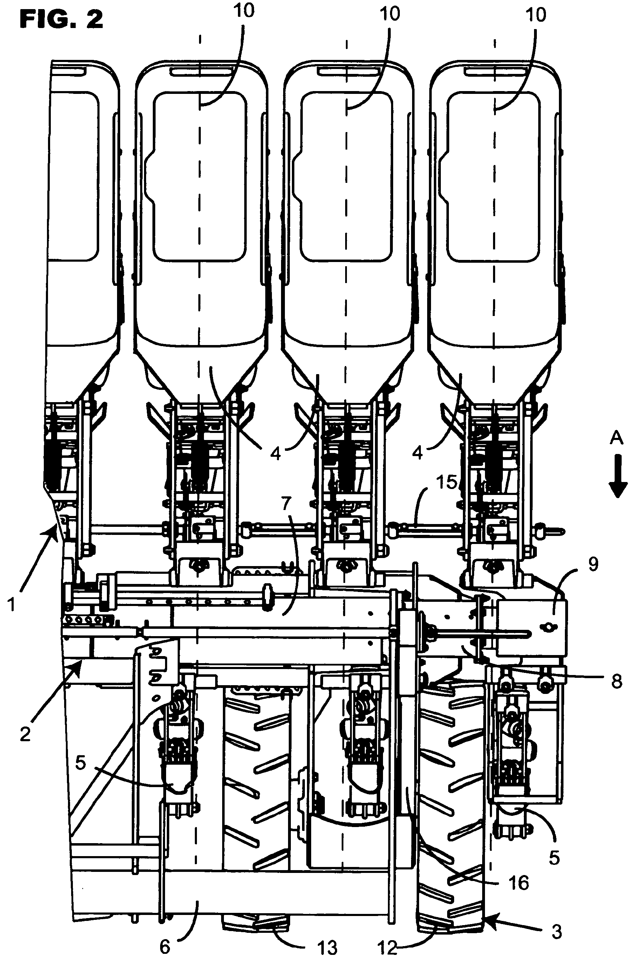

La figure 2 représente une extrémité du châssis (2) avec trois éléments semeurs (4) en vue de dessus. Chaque élément semeur (4) défini un rang de semis (10), ce rang de semis (10) est sensiblement confondu avec le plan vertical médian de l'élément semeur (4) correspondant. La distance entre deux rangs de semis (10) voisins défini l'écartement entre deux éléments semeurs (4) voisins. On remarque que l'écartement entre les rangs de semis (10) est serré. L'extrémité de châssis (2) représentée s'appui sur le sol par l'intermédiaire d'une roue porteuse (3). Cette roue porteuse (3) s'étend au voisinage de l'extrémité du châssis (2). Ce semoir permet l'apport simultané d'engrais lors du semis, ainsi un enfouisseur (5) s'étend à l'avant de chaque élément semeur (4). L'enfouisseur (5) est, de préférence, décalé latéralement par rapport au rang de semis.

Selon une importante caractéristique de l'invention, chaque roue porteuse (3) comporte des roues jumelles (12, 13) et que lesdites roues jumelles (12, 13) sont espacées l'une par rapport à l'autre et disposées de part et d'autre d'un rang de semis (10). De cette manière, le semoir de l'invention est capable de semer en rangs serrés sans tasser les rangs de semis (10), ni détériorer des pièces du semoir. En effet, l'encombrement en largeur desdites roues jumelles (12, 13) est tel que les rangs de semis (10) voisins auxdites roues jumelles (12, 13) ne sont pas écrasés. Pour que les graines ne soient pas semées dans les traces laissées par les roues jumelles (12, 13), elles sont décalées latéralement par rapport à l'élément semeur (4). Les roues jumelles (12, 13) s'étendent ainsi toujours entre les rangs de semis quel que soit le réglage de l'écartement entre les rangs de semis (10). De manière connue, l'écartement entre les rangs de semis est de 70 à 80 cm pour les cultures de maïs et de 50 à 60 cm pour le tournesol. En rangs serrés avec un écartement pouvant varier de 37,5 à 50 cm, le semoir est configuré pour semer des cultures en rangs serrés, par exemple du colza. La plage de réglage de l'écartement entre les rangs de semis (10) du semoir est donc étendue par l'ajout de valeurs inférieures. La plage de réglage de l'écartement s'étend donc de 37,5 à 80 cm. Grâce aux roues jumelles (12, 13), la charge du semoir est répartie sur une surface d'appui au sol plus importante. Les roues jumelles (12, 13) sont fixées sur un support commun, lequel support commun est fixé au châssis (2). Le support commun porte également l'enfouisseur (5) et l'élément semeur (4) correspondant. Les roues jumelles (12, 13) sont sensiblement identiques en largeur et en diamètre.

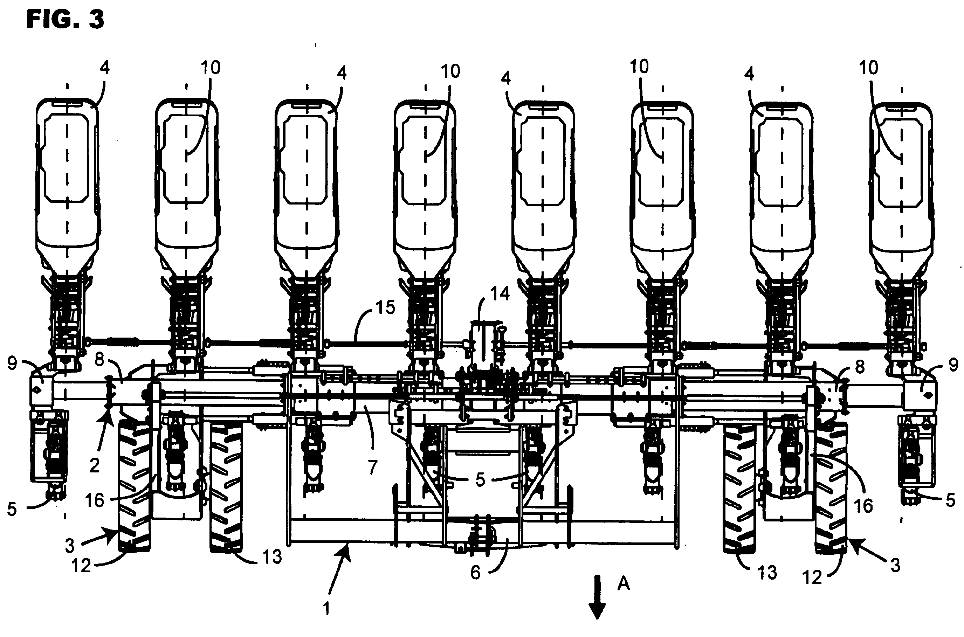

Dans l'exemple de réalisation des figures 1 et 3, le semoir représenté montre huit éléments semeurs (4) qui sont répartis symétriquement sur le châssis (2). Quatre éléments semeurs (4) sont montés sur la poutre centrale (7) et quatre autres éléments semeurs (4) sont montés sur les extensions coulissantes (8, 9). La poutre centrale (7) porte deux extensions coulissantes (8, 9) à chaque extrémité. Le châssis (2) s'appuie sur le sol via deux roues porteuses (3) disposées au voisinage de ses extrémités. Cette disposition apporte de la stabilité au semoir (1) et permet un bon suivi du terrain. La figure 1 représente un semoir (1) avec un écartement entre les rangs de semis (10) de 37,5 cm et la figure 3 représente un semoir (1) avec un écartement entre les rangs de semis (10) de 65 cm.

A la lumière de la figure 2, l'encombrement en largeur desdites roues jumelles (12, 13) est inférieur au double de l'écartement minimum entre deux rangs de semis (10) voisins. Grâce à cette caractéristique, les roues jumelles (12, 13) ne sont pas un obstacle lors du réglage du châssis en rangs serrés. L'écartement minimum correspond au réglage d'écartement le plus petit. Pour le semoir de l'invention, l'écartement minimum est égal à 37,5 cm et dans cette configuration de travail, les roues jumelles (12, 13) n'écrasent pas de rang de semis (10). L'encombrement en largeur de la roue porteuse (3) correspond à la largeur totale hors tout comprenant les roues jumelles, le support d'axe, etc. On remarque que les roues jumelles (12, 13), l'enfouisseur (5) et l'élément semeur (4) correspondant sont montés sur ledit châssis (2) au moyen d'un support commun. Leur position sur le support commun est fixe, par contre la position du support commun peut varier sur le châssis (2). Le support commun est, par exemple, une extension coulissante (8, 9). Dans la réalisation représentée, les roues jumelles (12, 13) sont fixées sur l'extension coulissante (8) proche de la poutre centrale (7). En étant fixé sur cette extension coulissante (8), les roues jumelles (12, 13) n'augmentent pas la largeur du semoir (1) au transport. Lorsque les éléments semeurs (4) sont écartés au minimum les uns des autres, le semoir est dans le gabarit de transport. La largeur du semoir (1) est alors de 3 m.

D'une manière préférentielle, l'espace situé entre lesdites roues jumelles (12, 13) additionné à la largeur de chaque roue jumelle (12, 13) correspond à la largeur maximale d'une roue porteuse (3). Cette largeur maximale correspondant à l'encombrement en largeur des roues jumelles (12, 13). La largeur d'une roue jumelle (12, 13) correspond sensiblement à la moitié de l'écartement minimum entre deux rangs de semis (10) voisins.

Lesdites roues jumelles (12, 13) et/ou l'enfouisseur (5) sont positionnées, de préférence en fonction du rang de semis (10). Un tel positionnement évite que les roues jumelles circulent sur le futur rang de semis (10). Généralement, l'enfouisseur (5) est à l'avant de l'élément semeur (4) correspondant et notamment par rapport au rang de semis (10). L'enfouisseur est distant d'environ 5 cm par rapport au rang de semis (10) et l'engrais est enfoui plus profondément dans le sol que les graines. De préférence, un enfouisseur (5) s'étend dans l'espace situé entre lesdites roues jumelles (12, 13). Ceci permet d'avoir une solution compacte. La position de l'enfouisseur (5) est avantageusement réglable entre les roues jumelles (12, 13).

Les roues jumelles (12, 13) sont montées à l'avant et au voisinage des extrémités dudit châssis (2). Dans un exemple de réalisation non représenté, les éléments semeurs (4) présente une trémie auxiliaire qui est moins encombrante et de ce fait, les roues jumelles (12, 13) peuvent être placées à l'arrière du châssis (2) et de part et d'autre de l'élément semeur (4).

Pour semer des graines à écartement constant, la vitesse de la distribution est avantageusement proportionnelle à la vitesse d'avance du semoir (1). Ainsi, les roues porteuses (3) du châssis (2) entraînent une boîte de vitesse (14) qui transmet le mouvement aux éléments semeurs (4) via une barre d'entraînement (15). L'entraînement de la distribution pour chaque élément semeur (4) est assuré de manière centralisée. L'entraînement de la boîte de vitesse (14) par les roues (3) est réalisé par l'intermédiaire d'un élément de transmission. Par raison de sécurité, l'élément de transmission est placé dans un carter (16). L'élément de transmission est par exemple une chaîne. Dans l'exemple de réalisation représenté, une seule des roues jumelles (12, 13) entraîne la boîte de vitesse (14) qui transmet le mouvement auxdits éléments semeurs (4). On remarque que la boîte de vitesse (14) est disposée dans le plan vertical médian du semoir (1) et à l'arrière du châssis (2) sur les figures 1 et 4. Cette position permet un accès optimal à la boîte de vitesse (14) par l'arrière.

Le semoir (1) comporte un équipement de fertilisation pour pouvoir réaliser l'apport d'engrais et le semis de graines en un seul passage. L'équipement de fertilisation est composé d'une trémie (non représentée), d'enfouisseurs (5) et de dispositifs d'acheminement vers les enfouisseurs (5). La trémie est destinée à contenir le fertilisant et les enfouisseurs (5) sont par exemple réalisés par des socs. La trémie peut être intégrée au semoir (1), déportée à l'avant du tracteur ou trainée derrière le semoir (1).

Les figures montrent un semoir possédant huit éléments semeurs (4). L'invention s'applique également à des semoirs ayant six éléments semeurs (4). Dans ce cas, la partie centrale (7) du châssis (2) ne présente qu'une seule extension coulissante (8) à chacune de ses extrémités.

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Semoir monograine (1) comportant un châssis (2) télescopique de largeur variable, au moins deux roues porteuses (3), des éléments semeurs (4) répartis de manière régulière et réglable sur ledit châssis (2) et des enfouisseurs (5) associés aux éléments semeurs (4), chaque élément semeur (4) définissant un rang de semis (10), lequel est sensiblement confondu avec le plan vertical médian de l'élément semeur (4) correspondant et la distance entre deux rangs de semis (10) voisins définissant l'écartement, ***caractérisé en ce que*** chaque roue porteuse (3) comporte des roues jumelles (12, 13) et que lesdites roues jumelles (12, 13) sont espacées l'une par rapport à l'autre et disposées de part et d'autre d'un rang de semis (10).

2. Semoir selon la revendication 1, ***caractérisé en ce que*** l'encombrement en largeur desdites roues jumelles (12, 13) est inférieur au double de l'écartement minimum entre deux rangs de semis (10) voisins.

3. Semoir selon la revendication 1 ou 2, ***caractérisé en ce que*** la largeur d'une roue jumelle (12, 13) correspond sensiblement à la moitié de l'écartement minimum entre deux rangs de semis (10) voisins.

4. Semoir selon l'une quelconque des revendications 1 à 3, ***caractérisé en ce que*** lesdites roues jumelles (12, 13) sont fixées sur un support commun, lequel est monté sur ledit châssis (2).

5. Semoir selon la revendication 4, ***caractérisé en ce que*** ledit support commun porte l'enfouisseur (5) et l'élément semeur (4) correspondant.

6. Semoir selon l'une quelconque des revendications 1 à 5, ***caractérisé en ce que*** ledit châssis (2) comporte une poutre centrale (7) et de part et d'autre au moins une extension coulissante (8, 9) et que lesdites roues jumelles (12, 13) sont fixées sur l'extension coulissante (8) proche de ladite poutre centrale (7).

7. Semoir selon l'une quelconque des revendications 1 à 6, ***caractérisé en ce* qu'**un enfouisseur (5) s'étend dans l'espace situé entre lesdites roues jumelles (12, 13).

8. Semoir selon l'une quelconque des revendications 1 à 7, ***caractérisé en ce* qu'**une seule des roues jumelles (12, 13) entraîne une boîte de vitesse qui transmet le mouvement auxdits éléments semeurs (4).

9. Semoir selon l'une quelconque des revendications 1 à 8, ***caractérisé en ce que*** lesdites roues jumelles (12, 13) sont montées à l'avant et au voisinage des extrémités dudit châssis (2).

10. Semoir selon l'une quelconque des revendications 1 à 9, ***caractérisé en ce que*** la plage de réglage de l'écartement entre les rangs de semis (10) s'étend de 37,5 à 80 cm.

## Patentansprüche

1. Einzelkornsämaschine (1) mit einem Teleskopgestell (2) mit variabler Breite, mindestens zwei Stützrädern (3), Säelementen (4), die regelmäßig und verstellbar auf dem Gestell (2) verteilt sind, und Einlegern (5), die mit den Säelementen (4) verbunden sind, wobei jedes Säelement (4) eine Saatreihe (10) definiert, die im Wesentlichen mit der vertikalen Mittelebene des entsprechenden Säelements (4) zusammenfällt, und der Abstand zwischen zwei nebeneinanderliegenden Saatreihen (10) den Zwischenraum definiert, ***dadurch gekennzeichnet,* dass** jedes Stützrad (3) Doppelräder (12, 13) umfasst und dass die Doppelräder (12, 13) voneinander beabstandet und auf beider Seiten einer Saatreihe (10) angeordnet sind.

2. Sämaschine nach Anspruch 1, ***dadurch gekennzeichnet,* dass** die Breitenabmessung der Doppelräder (12, 13) geringer ist als der zweifache Mindestabstand zwischen zwei nebeneinanderliegenden Saatreihen (10).

3. Sämaschine nach Anspruch 1 oder 2, ***dadurch gekennzeichnet,* dass** die Breite eines Doppelrads (12, 13) im Wesentlichen der Hälfte des Mindestabstands zwischen zwei nebeneinanderliegenden Saatreihen (10) entspricht.

4. Sämaschine nach irgend einem der Ansprüche 1 bis 3, ***dadurch gekennzeichnet,* dass** die Doppelräder (12, 13) auf einem gemeinsamen Halter befestigt sind, der am Gestell (2) angebracht ist.

5. Sämaschine nach Anspruch 4, ***dadurch gekennzeichnet,* dass** der gemeinsame Halter den Einleger (5) und das entsprechende Säelement (4) trägt.

6. Sämaschine nach irgend einem der Ansprüche 1 bis 5, ***dadurch gekennzeichnet,* dass** das Gestell (2) einen Mittelträger (7) und auf beider Seiten mindestens eine gleitende Verlängerung (8, 9) umfasst und dass die Doppelräder (12, 13) auf der gleitenden Verlängerung (8) nahe des Mittelträgers (7) befestigt sind.

7. Sämaschine nach irgend einem der Ansprüche 1 bis 6, ***dadurch gekennzeichnet,* dass** sich ein Einleger (5) im Raum zwischen den Doppelrädern (12, 13) erstreckt.

8. Sämaschine nach irgend einem der Ansprüche 1 bis 7, ***dadurch gekennzeichnet,* dass** nur eines der Doppelräder (12, 13) einen Getriebekasten antreibt, der die Bewegung auf die Säelemente (4) überträgt.

9. Sämaschine nach irgend einem der Ansprüche 1 bis 8, ***dadurch gekennzeichnet,* dass** die Doppelräder (12, 13) am Vorderteil und nahe den Enden des Gestells (2) angebracht sind.

10. Sämaschine nach irgend einem der Ansprüche 1 bis 9, ***dadurch gekennzeichnet,* dass** der Einstellbereich des Abstandes zwischen den Saatreihen (10) von 37,5 bis 80 cm reicht.

## Claims

1. Single seeder (1) including a telescopic chassis (2) of variable width, at least two carrier wheels (3), seeder elements (4) distributed in a regular and adjustable manner on the said chassis (2) and burying elements (5) associated with the seeder elements (4), each seeder element (4) defining a row of seeds (10), which is substantially coincident with the median vertical plane of the corresponding seeder element (4) and the distance between two neighbouring rows of seeds (10) defining the gap, ***characterised in* that** each carrier wheel (3) includes twin wheels (12, 13) and that the said twin wheels (12, 13) are spaced out from each other and arranged on either side of a row of seeds (10).

2. Seeder according to claim 1, ***characterised in* that** the overall width of the said twin wheels (12, 13) is less than twice the minimum gap between two neighbouring rows of seeds (10).

3. Seeder according to claim 1 or 2, ***characterised in* that** the width of one twin wheel (12, 13) is substantially equal to half of the minimum gap between two neighbouring rows of seeds (10).

4. Seeder according to any one of the claims 1 to 3, ***characterised in* that** the said twin wheels (12, 13) are fastened to a shared holder, which is mounted on the said chassis (2).

5. Seeder according to claim 4, ***characterised in* that** the said shared holder carries the burying element (5) and the corresponding seeder element (4).

6. Seeder according to any one of the claims 1 to 5, ***characterised in* that** the said chassis (2) includes a central beam (7) and on either side at least one sliding extension (8, 9) and that the said twin wheels (12, 13) are fastened to the sliding extension (8) close to the said central beam (7).

7. Seeder according to any one of the claims 1 to 6, ***characterised in* that** a burying element (5) extends in the space between the said twin wheels (12, 13).

8. Seeder according to any one of the claims 1 to 7, ***characterised in* that** only one of the twin wheels (12, 13) drives a gearbox that transmits the movement to the said seeder elements (4).

9. Seeder according to any one of the claims 1 to 8, ***characterised in* that** the said twin wheels (12, 13) are mounted at the front and in the vicinity of the ends of the said chassis (2).

10. Seeder according to any one of the claims 1 to 9, ***characterised in* that** the range for setting the gap between the rows of seeds (10) extends from 37.5 to 80 cm.
